# EUROPEAN PATENT APPLICATION

(11) **EP 4 613 613 A1**
(43) Date of publication of application: **10.09.2025**
(21) Application number: 23897237.6
(22) Date of filing: 26.09.2023
(51) Int. Cl.: B62D 21/00

(54) **AUTOMOTIVE SUB-FRAME STRUCTURE AND STIFFENING COMPONENT FOR SAME**

(30) Priority: 29.11.2022 JP 2022189943
(71) Applicant: JFE Steel Corporation, Tokyo 100-0011 (JP)
(72) Inventor: YAMAGUCHI Naoki, Tokyo 100-0011 (JP)
(74) Representative: Hoffmann Eitle
(86) International application number: PCT/JP2023/034887
(87) International publication number: WO 2024/116578

(57) **Abstract**

An automotive sub-frame structure is proposed that can improve the stiffness of a sub-frame and minimize an increase in vehicle body weight. The automotive sub-frame structure includes a pair of left and right side members that are formed by hollow members extending in a vehicle body front-rear direction of an automobile and each have a coupling part for a suspension arm, and two or more cross members that are formed by hollow members extending in a vehicle body left-right direction of the automobile and are connected to the pair of left and right side members in a direction intersecting the side members, wherein stiffening parts are installed inside the cross members, near connection parts between each of the cross members and each of the side members, and the stiffening parts each have a cross-section stiffening portion that entirely or partially fills a cross-section of the cross member, and a plate-surface stiffening portion that has a shape conforming to an inner surface of an upper plate or a lower plate of the cross member and to an inner surface of at least one of left and right wall plates of the cross member.

## Description

### Technical Field

The present invention relates to a structure of a sub-frame that is installed at a lower part of a vehicle body of an automobile to couple suspension arms and the vehicle body to each other, and to a stiffening part used therein.

### Background Art

In the vehicle bodies of some automobiles, a sub-frame that couples suspension arms for supporting wheels and the vehicle body to each other is installed at a lower part of the vehicle body. Sub-frames generally have either a quadrilateral frame shape in which two cross members extending in a vehicle body left-right direction are connected to two side members extending in a vehicle body front-rear direction, or an H-type structure that does not have a front cross member. The side members and the cross members need not be necessarily formed as separate bodies and connected to each other, and these members sometimes constitute one unified part.

The sub-frame is required to have high stiffness, as it deforms under load that is applied from the suspension arm as a suspension operates. Enhancing the stiffness of the sub-frame leads to improved riding comfort and thus improves the value of the automobile. On the other hand, the sub-frame is required to be lightweight from the viewpoint of the energy efficiency of the automobile. To reduce the weight of the sub-frame, reducing the plate thickness is effective when forming the sub-frame from a plate material. However, reducing the plate thickness generally reduces the stiffness, and thus enhancing the stiffness and reducing the weight are in a trade-off relationship.

Performance properties that degrade as a result of reducing the plate thickness include collision performance, static strength, and fatigue strength, and these can be remedied by adopting high-strength materials. In ordinary metal materials, however, enhancing the strength causes little change in the elastic modulus, and therefore enhancing the strength of the material cannot be expected to enhance the stiffness. Thus, weight reduction is not always possible due to the difficulty of securing stiffness. As a solution, Patent Literatures 1 and 2 propose methods for improving the stiffness of a sub-frame by disposing stiffening parts at optimal positions obtained by a shape optimization analysis (topology optimization) of a stiffening member model.

Patent Literature 1 discloses a technology for a sub-frame structure of an automobile that is formed in a quadrilateral frame shape by side members and cross members each formed by a hollow member. In this technology, tubular members linking an upper side and a lower side to each other are installed as stiffening parts inside the side members and the cross members, at connection parts between the side members and the cross members. Patent Literature 2 discloses a technology in which stiffening members made of resin and having a columnar part that links an upper side and a lower side are packed or installed inside side members and cross members each formed by a hollow member, at connection parts between the side members and the cross members.

Further, Patent Literature 3 discloses a reinforcing structure in a sub-frame at a vehicle body front part or a vehicle body rear part of an automobile. This reinforcing structure is configured so as to allow a charging module to be incorporated therein and serves to improve torsional stiffness. This reinforcing structure is configured as a plate having shear strength, and the charging module is embedded in an opening that is provided by cutting away the material of the reinforcing structure.

Further, Patent Literature 4 discloses a technology for a battery frame in which a pair of side members and a cross member each formed in a tubular shape are coupled to each other by coupling members, with the level of the side members set to be higher than the level of the cross member. In this technology, at fragile parts located at end portions of the cross member that have a lower flexural capacity relative to a lateral collision, a reinforcing member that couples an upper wall and a lower wall of the fragile part to each other is installed. As the reinforcing member, a coupling rod that penetrates through the upper wall and the lower wall, or a bulk that is formed by a tubular steel-sheet member having a substantially rectangular cross-sectional shape and is welded along inner peripheral surfaces of the upper wall and the lower wall is installed.

### Citation List

### Patent Literature

Patent Literature 1: JP-A-2020-083018
Patent Literature 2: JP-A-2020-075656
Patent Literature 3: Japanese Patent No. 5822896
Patent Literature 4: JP-A-2013-035410

### Summary of Invention

### Technical Problem

One problem with the methods described in Patent Literatures 1 and 2 is that a large number of new parts are added, which incurs an additional production costs. One problem with the reinforcing structure of Patent Literature 3 is that, since it is formed by a plate having an opening and having shear strength, it improves the torsional stiffness of the sub-frame but also adds to the vehicle body weight. One problem with the method described in Patent Literature 4 is that while it can inhibit bending of the cross member in response to a lateral collision, it cannot sufficiently improve the torsional stiffness of the battery frame in the vehicle up-down direction or the bending stiffness thereof in the vehicle body left-right direction.

Therefore, the present invention aims to provide a sub-frame structure of an automobile that improves the stiffness of sites to be stiffened while minimizing an increase in the number of parts by restricting the sites to be stiffened to only some portions of cross members, and that improves the stiffness of the sub-frame while minimizing an increase in the vehicle body weight. Further, the present invention aims to provide a stiffening part used in that sub-frame structure.

### Solution to Problem

As a result of vigorously studying effective sites to be stiffened for improving the stiffness of a sub-frame having a closed cross-sectional structure, the present inventor found that it was important to stiffen insides of cross members that are connected to side members in a direction intersecting the side members, near connection parts therebetween. Further, the present inventor found that inhibiting deformation of the cross-sections near the connection parts of the cross members formed by hollow members was effective in improving the stiffness of the sub-frame.

An automotive sub-frame structure of the present invention that solves the conventional problems based on the above-described insight of the present inventor is an automotive sub-frame structure including:
a pair of left and right side members that are formed by hollow members extending in a vehicle body front-rear direction of an automobile and each have a coupling part for a suspension arm; and
two or more cross members that are formed by hollow members extending in a vehicle body left-right direction of the automobile and are connected to the pair of left and right side members in a direction intersecting the side members, characterized in that:
   stiffening parts are installed inside the cross members, near connection parts between each of the cross members and each of the side members; and
   the stiffening parts each have a cross-section stiffening portion that entirely or partially fills a cross-section of the cross member, and a plate-surface stiffening portion that has a shape conforming to an inner surface of an upper plate or a lower plate of the cross member and to an inner surface of at least one of left and right wall plates of the cross member.

In the automotive sub-frame structure of the present invention, it is preferable that each of the side members and one or more of the cross members be formed by a high-strength steel sheet with a tensile strength of 590 MPa class or more, because then the weight of the sub-frame structure can be reduced through reduction of the thickness of the steel sheet. In the automotive sub-frame structure of the present invention, it is preferable that the stiffening part be formed by a steel sheet with a tensile strength ranging from 270 MPa to 440 MPa class, because then the stiffening part can be produced inexpensively and easily.

A stiffening part of an automotive sub-frame structure of the present invention that solves the conventional problems based on the above-described insight of the present inventor is a stiffening part that is used in an automotive sub-frame structure including:
a pair of left and right side members that are formed by hollow members extending in a vehicle body front-rear direction of an automobile and each have a coupling part for a suspension arm; and
two or more cross members that are formed by hollow members extending in a vehicle body left-right direction of the automobile and are connected to the pair of left and right side members in a direction intersecting the side members, characterized in that:
   the stiffening parts are installed inside the cross members, near connection parts between each of the cross members and each of the side members; and
   the stiffening parts each have a cross-section stiffening portion that entirely or partially fills a cross-section of the cross member, and a plate-surface stiffening portion that has a shape conforming to an inner surface of an upper plate or a lower plate of the cross member and to an inner surface of at least one of left and right wall plates of the cross member.

In the automotive sub-frame structure and the stiffening part thereof of the present invention, it is preferable that the plate-surface stiffening portion of the stiffening part stiffen a ridge portion on an inner side that is curved into an L-shape in the connection part that connects the side member and the cross member to each other, because then deformation of the connection parts where the side members and the cross members are connected to each other and stress concentration tends to occur can be inhibited, and the stiffness of the entire sub-frame structure can be improved.

### Advantageous Effects of Invention

The automotive sub-frame structure and the stiffening part thereof of the present invention can improve the stiffness of the sub-frame, and at the same time can be expected to improve the collision performance, the static strength, and the fatigue strength thereof by inhibiting deformation. Moreover, an increase in the number of parts from that in a conventional sub-frame structure is minimized, so that an increase in the vehicle body weight can be minimized. Compared with when a large number of parts or new parts are added as in the conventional stiffening methods, the number of sites at which the stiffening parts are joined to the sub-frame is smaller, and thus improvement of the productivity can be expected.

### Brief Description of Drawings

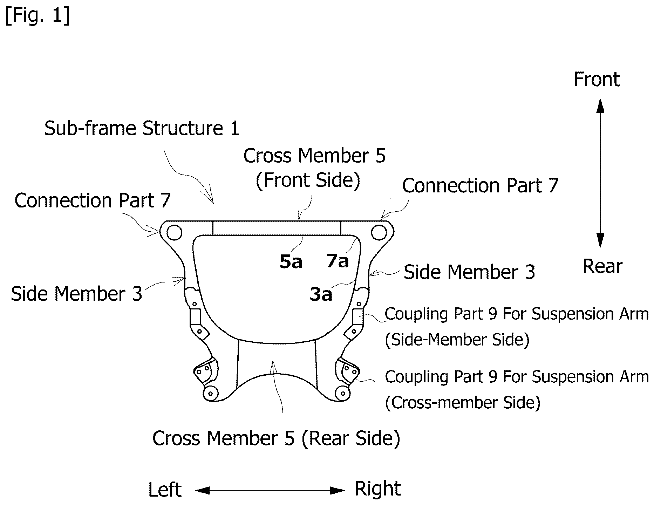

[Fig. 1] Fig. 1 is a plan view schematically showing an automotive sub-frame structure of one embodiment of the present invention.

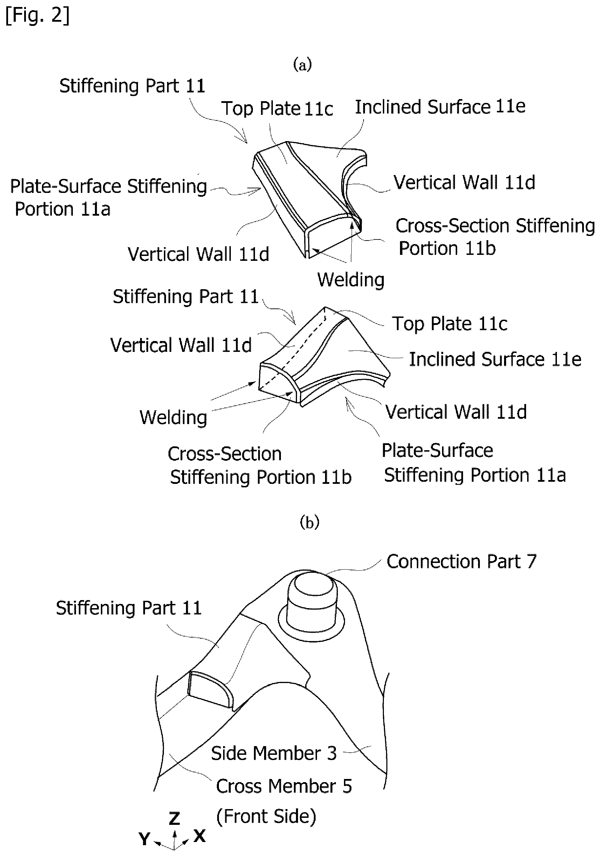

[Fig. 2] Fig. 2 (a) is a perspective view showing a stiffening part of one embodiment of the present invention in a state as seen from two directions, and Fig. 2 (b) is a transparent view showing, in close-up, a situation where the stiffening part of the embodiment is installed in the sub-frame structure of the embodiment shown in Fig. 1.

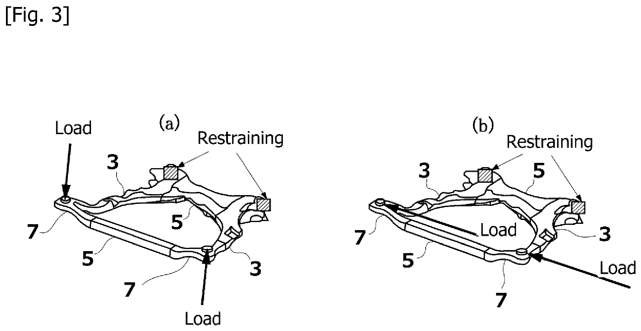

[Fig. 3] Fig. 3 (a) is an explanatory view showing positions of restraining and positions and directions of applying load in a torsion analysis using a finite element analysis model of the sub-frame structure of the above-described embodiment, and Fig. 3 (b) is an explanatory view showing positions of restraining and positions and directions of applying load in a bending analysis using a finite element analysis model of the sub-frame structure of the above-described embodiment.

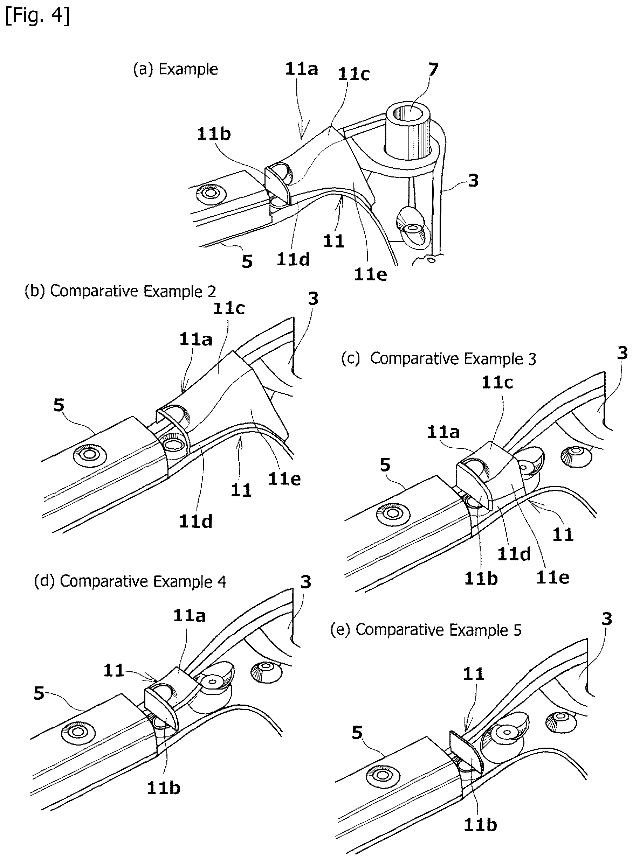

[Fig. 4] Fig. 4 is an explanatory view showing stiffening parts of Example (Invention Example) and Comparative Examples 2 to 5, while showing part of a cross member, a connection part, and an upper-side portion of a side member in a vehicle body up-down direction in the sub-frame structure in a transparent view.

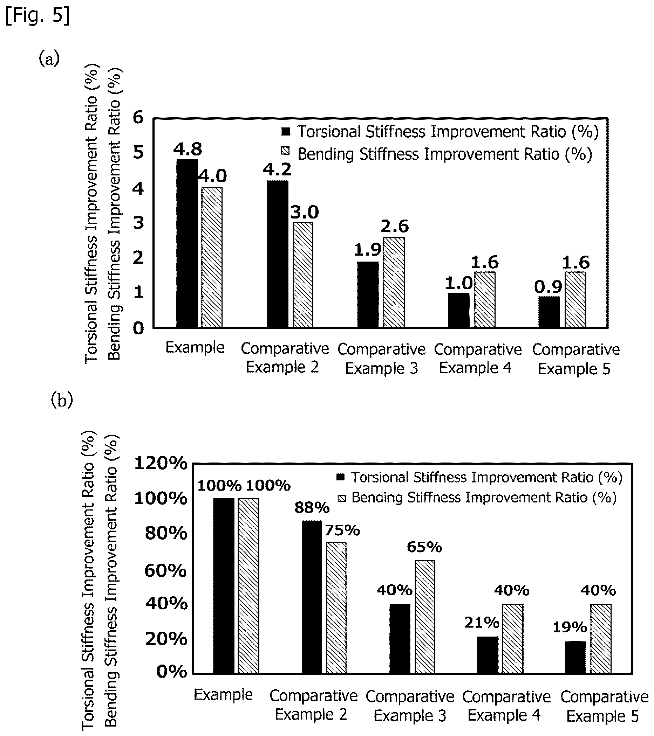

[Fig. 5] Fig. 5 (a) is an explanatory view showing a torsional stiffness improvement ratio and a bending stiffness improvement ratio of Example and Comparative Examples 2 to 5 based on Comparative Example 1, and Fig. 5 (b) is an explanatory view showing a torsional stiffness improvement ratio and a bending stiffness improvement ratio of Comparative Examples 2 to 5 based on Example.

### Description of Embodiment

The present invention will be more specifically described below with reference to the drawings. Fig. 1 is a plan view schematically showing an automotive sub-frame structure of one embodiment of the present invention. The sub-frame structure of the embodiment denoted by reference sign 1 in the drawing is formed by a pair of left and right side members 3 and a pair of two front and rear cross members 5 so as to have a quadrilateral frame shape.

The side members 3 are formed by hollow members extending in a vehicle body front-rear direction of the automobile and each have a coupling part 9 for a suspension arm. The cross members 5 are formed by hollow members extending in a vehicle body left-right direction of the automobile, and are each connected to the pair of left and right side members 3 in a direction intersecting the side members 3 by connection parts 7 (parts that are curved into an L-shape) that are curved toward an inner side of the side members 3 in the vehicle body left-right direction. Each connection part 7 has a curved ridge portion 7a that links a ridge portion 3a in the side member 3 on the inner side in the vehicle body left-right direction and a ridge portion 5a on a rear side in the vehicle body front-rear direction in the cross member 5 on a front side in the vehicle body front-rear direction to each other. Alternatively, the sub-frame structure of the present invention may be an H-type (ladder frame) that does not have the front-side cross member 5. In the sub-frame structure 1 of the above-described embodiment, the side members 3 and the cross members 5 constitute one unified part, but the side members 3 and the cross members 5 need not necessarily constitute one unified part and may be formed as separate bodies and connected to each other.

Fig. 2 (a) is a perspective view showing, as a representative example, one of stiffening parts of one embodiment of the present invention that is installed on a right side in an inside of the front-side cross member 5 of the sub-frame structure 1 of the above-described embodiment, in a state as seen from two different directions. Fig. 2 (b) is a transparent view showing, in close-up, a situation where the stiffening part of the embodiment denoted by reference sign 11 in the drawing is installed on the right side in the inside of the front-side cross member 5 of the sub-frame structure 1 of the embodiment. The stiffening part 11 is formed by pressing a steel sheet into a gutter shape, and has a plate-surface stiffening portion 11a and a cross-section stiffening portion 11b.

The plate-surface stiffening portion 11a has a top plate 11c and an inclined surface 11e that are shaped so as to conform to at least part of an inner surface of an upper plate or a lower plate, in the shown example, the upper plate of the cross member 5 near the connection part 7, and vertical walls 11d that are shaped so as to conform to at least part of inner surfaces of left and right wall plates of the cross member 5. Here, the vertical walls 11d and the inclined surface 11e have shapes that conform to an inner surface of the connection part 7 that continues from an inner-side portion of the L-shaped curve to near a border with the side member 3. Thus, the plate-surface stiffening portion 11a stiffens the curved ridge portion 7a on the inner side that is curved into an L-shape in the connection part 7 that connects the side member 3 and the front-side cross member 5 to each other. The plate-surface stiffening portion 11a extends to about 15 to 20% of the length of the cross member 5 in a vehicle width direction. The plate-surface stiffening portion 11a is welded or attached with an adhesive (resin) etc. to the inner surfaces of the upper plate and the left and right side walls of the cross member 5 and to the inner-side portion of the L-shaped curve of the connection part 7. This plate-surface stiffening portion 11a can improve the stiffness of the sub-frame structure 1 by increasing the apparent plate thickness of the portion to be stiffened of the cross member 5. Inserting a resin with a predetermined thickness, which is used as a bonding adhesive, between the upper plate and the left and right side walls of the cross member 5 and the plate-surface stiffening portion 11a of the stiffening part 11 can further increase the apparent plate thickness of the portion to be stiffened. Increasing the apparent plate thickness of the portion to be stiffened enhances the bending stiffness of that portion, and thus stiffness higher than simply totaling the plate thicknesses of the original part and the plate-surface stiffening portion 11a can be expected. Further, the plate-surface stiffening portion 11a stiffens the curved ridge portion 7a in the connection part 7 from the side member 3 to the front-side cross member 5. This can prevent deformation of the connection part 7 where the side member 3 and the cross member 5 are connected to each other and stress concentration tends to occur, and improve the stiffness of the entire sub-frame structure 1. Examples of types of adhesives (resins) include a thermoplastic resin, a thermosetting resin, and an elastomer-based resin.

The cross-section stiffening portion 11b entirely or partially fills the hollow cross-section of the cross member 5 near the connection part 7 between the side member 3 and the front-side cross member 5. When an external force (load) that induces bending deformation or torsional deformation of the sub-frame structure 1 is applied, the cross-section stiffening portion 11b inhibits deformation of the cross-section of the cross member 5 that has lower strength compared with the side member 3 that is designed to withstand a collision from the vehicle body front side, and can thereby improve the stiffness of the entire sub-frame structure 1.

The reason for installing the stiffening parts 11 inside each cross member 5 at parts located near the connection parts 7 between the cross member 5 and the side members 3 is as follows. At a part like the connection part 7 where the global shape such as that in an intermediate portion of the side member 3 or the cross member 5 changes (hereinafter referred to as "shape changing part," stress concentrates and deformation tends to occur compared with portions of the side member 3 and the cross member 5 adjoining the shape changing part. Thus, this part causes a decrease in the stiffness of the sub-frame structure 1. For this reason, it is important to stiffen the parts near the connection parts 7.

Since the side member 3 and the cross member 5 are formed by hollow members having a substantially rectangular cross-section, when a bending or torsional load is applied to the sub-frame structure 1, stress concentration occurs at ridge portions of the substantially rectangular cross-section. Therefore, it is important to stiffen the shape changing part, i.e., the ridge portion as a site to be stiffened in the cross-section of the connection part 7. Here, in the stiffening part 11 shown in Fig. 2 (a), the ridge portion is a collective term for ridges between the top plate 11c and the vertical wall 11d, between the top plate 11c and the inclined surface 11e, and between the vertical wall 11d and the inclined surface 11e. The plate-surface stiffening portion 11a has such a shape as to conform to part or the whole of an inner peripheral surface of a part of the cross member 5 near the connection part 7, and stiffens the ridge portion of the part of the cross member 5 near the connection part 7 by covering the ridge portion from the inner side.

The stiffening part 11 shown in Fig. 2 has the plate-surface stiffening portion 11a and the cross-section stiffening portion 11b connected to each other by welding at their peripheral edges, and can thereby produce a higher stiffening effect than when simply the plate-surface stiffening portion 11a and the cross-section stiffening portion 11b each independently stiffen. In the sub-frame structure 1 of the above-described embodiment, the stiffening part 11 is installed on the right side in the inside of the front-side cross member 5 as a representative example. However, the stiffening parts 11 of the same configuration are also installed on the left side in the inside of the front-side cross member 5 and further on both left and right sides in the inside of the rear-side cross member 5.

### <Material Strength>

Since the stiffening part 11 is for improving the stiffness of the sub-frame structure 1, there is no need to use a high-strength material for the stiffening part 11, and a tensile strength ranging from 270 MPa to 440 MPa class is preferable in terms of the material price as well as the ease of processing. On the other hand, in this embodiment, since higher stiffness of the sub-frame structure 1 can be achieved by the stiffening part 11, the thickness of the steel sheet used for the sub-frame structure 1 can be reduced from the viewpoint of stiffness. To reduce the weight of the sub-frame structure 1 while maintaining its strength, it is preferable to use a high-strength material with a tensile strength of 590 MPa class or more for one of the parts of the sub-frame structure 1. While the part for which a high-strength material is used is not particularly limited, since the plate thickness of the pair of left and right side members 3 is often determined from the viewpoint of strength, the thickness thereof can be often reduced by using a high-strength material from the viewpoint of improving the collision strength.

### (Analytical Study Example 1)

In Analytical Study Example 1, the influence that the sub-frame structure 1 of the above-described embodiment had on the stiffness of an ordinary sub-frame was analytically studied. Example (Invention Example) was the sub-frame structure 1 of Fig. 1 in which the stiffening part 11 as shown in Figs. 2 (a) and (b) was installed on the left and right sides in the inside of the front-side cross member 5 and on the left and right sides in the inside of the rear-side cross member 5, and Comparative Example 1 was the sub-frame structure 1 of Fig. 1 in which the stiffening part 11 was not installed. Of the coordinate axes shown in Fig. 2 (b), the X-axis represents the vehicle body left-right direction (positive on the vehicle body right side); the Y-axis represents the vehicle body front-rear direction (positive on the vehicle body front side); and the Z-axis represents the vehicle body up-down direction (positive on the vehicle body upper side).

Here, the pair of left and right side members 3 and the front-side and rear-side cross members 5 of each of the sub-frame structures 1 of Example and Comparative Example 1 were each formed by a steel sheet with a sheet thickness of 2.0 mm and a tensile strength of 590 MPa class, and the plate-surface stiffening portion 11a and the cross-section stiffening portion 11b of each stiffening part 11 of the sub-frame structure 1 of Example was formed by a steel sheet with a sheet thickness of 1.0 mm and a tensile strength of 270 MPa class. The length of each stiffening part 11 was about 10% of the length of each cross member 5 in the vehicle body left-right direction, and each stiffening part 11 was bonded with a thermoplastic construction adhesive to the inside of the part of each cross member 5 near the connection part 7.

As for analysis conditions, the two conditions of torsion shown in Fig. 3 (a) and bending shown in Fig. 3 (b) were used. A displacement of a load point relative to a unit load was obtained using a finite element method, and a stiffness change ratio from a conventional part was calculated using the inverse number of the displacement as stiffness. Figs. 3 (a) and (b) each show the positions where the load was applied and the positions where the sub-frame structure 1 was restrained.

In "analysis condition: torsion" of Fig. 3 (a), the left and right end portions of the rear-side cross member 5 were restrained and a load (1 kN) was applied upward and downward in the vehicle body up-down direction to the left and right end portions of the front-side cross member 5. An amount of displacement of the left and right end portions of the cross member 5 in the vehicle body up-down direction per unit load was obtained as torsional stiffness, and an improvement ratio of the torsional stiffness (torsional stiffness improvement ratio) of Example based on Comparative Example 1 was evaluated.

In "analysis condition: bending" of Fig. 3 (b), the left and right end portions of the rear-side cross member 5 were restrained and a load (1 kN) was applied in the vehicle body rightward direction to the left and right end portions of the front-side cross member 5. An amount of displacement of the left and right end portions of the cross member 5 in the vehicle body left-right direction per unit load was obtained as bending stiffness, and an improvement ratio of the bending stiffness (bending stiffness improvement ratio) of Example based on Comparative Example 1 was evaluated.

As a result, it was revealed that Example was improved in both of the torsional stiffness and the bending stiffness, with the torsional stiffness improvement ratio being 4.8% in the case of torsion and the bending stiffness improvement ratio being 4.0% in the case of bending based on Comparative Example 1 that was the sub-frame structure 1 of Fig. 1 in which the stiffening part 11 was not installed.

### (Analytical Study Example 2)

In Analytical Study Example 2, degrees of contribution of the plate-surface stiffening portion 11a, the cross-section stiffening portion 11b, and the curved ridge portion 7a of the plate-surface stiffening portion 11a composing the stiffening part 11 of the sub-frame structure 1 of the above-described embodiment to the torsional stiffness improvement ratio and the bending stiffness improvement ratio were studied. Fig. 4 shows the stiffening parts of Example (Invention Example) and Comparative Examples 2 to 5, to be shown below, while showing part of the cross member 5, the connection part 7, and an upper-side portion of the side member 3 in the vehicle body up-down direction of the sub-frame structure 1 in a transparent state (not shown).

Example (Invention Example) shown in Fig. 4 (a) is the same as that in Analytical Study Example 1 described above. In Comparative Example 2 shown in Fig. 4 (b), the cross-section stiffening portion 11b of the stiffening part 11 of Example shown in Fig. 4 (a) is omitted and only the plate-surface stiffening portion 11a thereof is left. In Comparative Example 3 shown in Fig. 4 (c), the part of the curved ridge portion 7a (see Fig. 1) on the inner side that is curved into an L-shape in the connection part 7 is omitted from the stiffening part 11 of Example shown in Fig. 4 (a). In Comparative Example 4 shown in Fig. 4 (d), parts corresponding to the inclined surface 11e and the vertical walls 11d in the plate-surface stiffening portion 11a are omitted from the stiffening part of Comparative Example 3 shown in Fig. 4 (c). In Comparative Example 5 shown in Fig. 4 (e), the plate-surface stiffening portion 11a is omitted from the stiffening part 11 of Example shown in Fig. 4 (a) and only the cross-section stiffening portion 11b thereof is left.

Fig. 5 (a) shows the torsional stiffness improvement ratios (%) and the bending stiffness improvement ratios (%) of Example and Comparative Examples 2 to 5 based on Comparative Example 1 described above. Fig. 5 (b) shows the torsional stiffness improvement ratios (%) and the bending stiffness improvement ratios (%) of Comparative Examples 2 to 5 based on Example (100%).

A comparison between Comparative Example 2 and Comparative Example 5 revealed that the plate-surface stiffening portion 11a of the stiffening part 11 had a high degree of contribution to improving the stiffness, with its torsional stiffness improvement ratio being 4.7 times and its bending stiffness improvement ratio being 1.9 times those of the cross-section stiffening portion 11b. A comparison between Example and Comparative Examples 3 to 5 revealed that stiffening the curved ridge portion 7a on the inner side that was curved into an L-shape in the connection part 7 could significantly improve the torsional stiffness.

While the present invention has been described above based on the example shown in the drawings, the invention is not limited to the above-described example shown in the drawings and can be changed as appropriate within the scope described in the claims. For example, in the above-described embodiment, the stiffening part 11 is installed so as to lie along the upper plate of the cross member 5, but the sub-frame structure of the present invention may have the stiffening part 11 installed so as to lie along the lower plate of the cross member 5.

While the sub-frame structure of the above-described embodiment is applied to a sub-frame at a vehicle body rear part to improve its stiffness, the sub-frame structure of the present invention may instead be applied to a sub-frame at a vehicle body front part to improve its stiffness.

### Industrial Applicability

The automotive sub-frame structure and the stiffening part thereof of the present invention can improve the stiffness of the sub-frame, and at the same time can be expected to improve the collision performance, the static strength, and the fatigue strength thereof by inhibiting deformation. Moreover, an increase in the number of parts from that in a conventional sub-frame structure is minimized, so that an increase in the vehicle body weight can be minimized. Compared with when a large number of parts or new parts are added as in the conventional stiffening methods, the number of sites at which the stiffening parts are joined to the sub-frame is smaller, and thus improvement of the productivity can be expected.

### Reference Signs List

1 sub-frame structure
3 side member
3a ridge portion on inner side in vehicle body left-right direction
5 cross member
5a ridge portion on rear side in vehicle body front-rear direction
7 connection part
7a curved ridge portion
9 coupling part for suspension arm
11 stiffening part
11a plate-surface stiffening portion
11b cross-section stiffening portion
11c top plate
11d vertical wall
11e inclined surface

## Claims

1. An automotive sub-frame structure comprising:
a pair of left and right side members that are formed by hollow members extending in a vehicle body front-rear direction of an automobile and each have a coupling part for a suspension arm; and
two or more cross members that are formed by hollow members extending in a vehicle body left-right direction of the automobile and are connected to the pair of left and right side members in a direction intersecting the side members, **characterized in that**:
stiffening parts are installed inside the cross members, near connection parts between each of the cross members and each of the side members; and
the stiffening parts each have a cross-section stiffening portion that entirely or partially fills a cross-section of the cross member, and a plate-surface stiffening portion that has a shape conforming to an inner surface of an upper plate or a lower plate of the cross member and to an inner surface of at least one of left and right wall plates of the cross member.

2. The automotive sub-frame structure according to claim 1, wherein the plate-surface stiffening portion of the stiffening part stiffens a ridge portion on an inner side that is curved into an L-shape in the connection part that connects the side member and the cross member to each other.

3. The automotive sub-frame structure according to claim 1 or 2, wherein each of the side members and one or more of the cross members are formed by a high-strength steel sheet with a tensile strength of 590 MPa class or more.

4. The automotive sub-frame structure according to claim 1 or 2, wherein the stiffening part is formed by a steel sheet with a tensile strength ranging from 270 MPa to 440 MPa class.

5. A stiffening part of an automotive sub-frame structure that is used in an automotive sub-frame structure including:
a pair of left and right side members that are formed by hollow members extending in a vehicle body front-rear direction of an automobile and each have a coupling part for a suspension arm; and
two or more cross members that are formed by hollow members extending in a vehicle body left-right direction of the automobile and are connected to the pair of left and right side members in a direction intersecting the side members, **characterized in that**:
the stiffening parts are installed inside the cross members, near connection parts between each of the cross members and each of the side members; and
the stiffening parts each have a cross-section stiffening portion that entirely or partially fills a cross-section of the cross member, and a plate-surface stiffening portion that has a shape conforming to an inner surface of an upper plate or a lower plate of the cross member and to an inner surface of at least one of left and right wall plates of the cross member.

6. The stiffening part of the automotive sub-frame structure according to claim 5, wherein the plate-surface stiffening portion of the stiffening part stiffens a ridge portion on an inner side that is curved into an L-shape in the connection part that connects the side member and the cross member to each other.
